# EUROPÄISCHE PATENTSCHRIFT

(11) **EP 3 428 050 B1**
(45) Veröffentlichungstag und Bekanntmachung des Hinweises auf die Patenterteilung: **11.08.2021**
(21) Anmeldenummer: 18166950.8
(22) Anmeldetag: 12.04.2018
(51) Int. Cl.: B62K 21/00, B62H 5/02, B62D 3/14

(54) **ZWEIRAD MIT HYDRAULISCHEM LENKSYSTEM UND VERFAHREN**
BICYCLE COMPRISING A HYDRAULIC STEERING SYSTEM AND METHOD
DEUX-ROUES AVEC SYSTÈME HYDRAULIQUE DE DIRECTION ET PROCÉDÉ

(30) Priorität: 22.06.2017 DE 102017210456
(43) Veröffentlichungstag der Anmeldung: 16.01.2019
(73) Patentinhaber: Robert Bosch GmbH, 70442 Stuttgart (DE)
(72) Erfinder: Wienss, Andreas, 72800 Eningen Unter Achalm (DE); Dauer, Felix, 72074 Tuebingen (DE)

(56) Entgegenhaltungen:
- EP-A1- 2 660 125
- EP-A2- 2 141 060
- EP-A2- 2 952 423
- WO-A1-2009/065454
- CN-A- 105 313 956
- CN-U- 205 168 619
- DE-A1- 4 042 151
- DE-A1- 19 828 816
- DE-A1- 19 840 625
- DE-A1-102008 021 973
- DE-B3-102010 061 298
- DE-C1- 19 801 393

## Beschreibung

### Stand der Technik

Die vorliegende Erfindung betrifft ein hydraulisches System. Ferner betrifft die vorliegende Erfindung ein Zweirad, insbesondere Fahrrad, aufweisend das hydraulische System. Außerdem betrifft die vorliegende Erfindung ein Verfahren zum Eingriff in das Lenkverhalten einer zu lenkenden Einheit des Zweirads.

Der Eingriff in die Lenkung stellt generell eine Möglichkeit dar, eine kritische Fahrsituation zu stabilisieren. Stand der Technik (zumindest bei Zweirädern) ist eine Lenkung mit mechanischer Rückfallebene, d.h. feste Verbindung, in die nur bedingt, bspw. durch Zusatzdrehmomente, eingegriffen werden kann.

Aus dem Stand der Technik sind Steer-by-Wire bekannt. Unter Steer-by-Wire versteht man ein System in der Kraftfahrzeugtechnik, bei dem ein Lenkbefehl von einem Sensor (insbesondere dem Lenkrad) über ein Steuergerät ausschließlich elektrisch zum elektromechanischen Aktor, der den Lenkbefehl ausführt, weitergeleitet wird. Es besteht bei einem solchen System keine mechanische Verbindung zwischen Lenkrad und gelenkten Rädern. Dies hat den Nachteil, dass bei Wegfall einer Energieversorgung keine Lenkung mehr möglich ist. Entsprechend aufwändig muss eine sichere Energieversorgung dargestellt werden.

Weitere Möglichkeiten zur seitlichen Stabilisierung sind Wegnahme des Motordrehmoments bei eBikes. Dies ist bei eBikes aber nicht anwendbar, da in einer Kurvenfahrt der Elektromotor kein Drehmoment erzeugt, da normalerweise niemand pedaliert.

### Offenbarung der Erfindung

Die Erfindung geht aus von einem hydraulischen System nach Gattung des unabhängigen Anspruchs 1. Ferner geht die Erfindung aus von einem Zweirad System nach Gattung des unabhängigen Anspruchs 11. Ferner geht die Erfindung aus von einem Verfahren nach Gattung des unabhängigen Anspruchs 12.

Das erfindungsgemäße hydraulische System zur Kraftübertragung eines Lenkmoments von einer Lenkeinheit auf eine zu lenkende Einheit auf. Das hydraulische System ist eingerichtet, einen Druck im hydraulischen System zu modulieren und so in das Lenkverhalten der zu lenkenden Einheit zur Stabilisierung des Zweirads einzugreifen.

Anders als bei einem vierrädrigen Fahrzeug kann beim Zweirad in kritischen Kurvensituationen eine Stabilisierung des Fahrzeugs nicht über gezielte Bremseingriffe, d.h. rechts/links Eingriffe, gesteuert werden, sodass Lenkeingriffe einige der wenigen Eingriffsmöglichkeiten darstellen.

Nutzt man eine Lenkung, die hydraulisch betrieben wird, d.h. analog zu hydraulischen Bremsen, kann über das hydraulische System regulierend eingegriffen werden. Fällt die Elektronik oder die Energieversorgung aus, ist eine normale Lenkung die Rückfallebene. Vorzugsweise kann auf Erfahrung und insbesondere auf Komponenten, die aus bremsregulierenden Eingriffen, wie ABS/ESP bekannt sind, zurückgegriffen werden.

Unter einer Lenkeinheit kann ein Lenker, insbesondere Fahrradlenker, oder ein Lenkrad verstanden werden. Unter einer zu lenkenden Einheit kann eine Gabel oder eine Fahrradgabel verstanden werden. Das Rad ist dabei mit der zu lenkenden Einheit drehbar gelagert.

Unter einem Fahrrad kann vorzugsweise ein Elektrofahrrad (eBike) verstanden werden. Unter einem Rad ist ein Vorderrad oder ein Hinterrad des Zweirads zu verstehen. Da die Lenkeinheit von der zu lenkenden Einheit mechanisch entkoppelt ausgebildet ist, kann sie räumlich flexibel im Zweirad angebracht werden; sie kann, muss aber nicht über der zu lenkenden Einheit sitzen. Eine Kopplung der beiden Bauteile erfolgt lediglich mittels des hydraulischen Systems.

Das hydraulische System ist erfindungsgemäß eingerichtet, bei Bedarf mittels Druckmodulation in das Lenkverhalten des Fahrrads einzugreifen.

Unter einem druckmodulierenden Eingriff ist ein Eingriff zu verstehen, der den Lenkdruck verändert.

Druckmodulierende Eingriffe können unter anderem Folgende sein:
- Stabilisierung des Fahrrads bei niedrigen Geschwindigkeiten,
- Blockade eines Lenkwinkels bei Stillstand für ein leichteres Auf- und Absteigen,
- Blockade eines Lenkwinkels als Diebstahlschutz, z.B. bei einer 10°-90° verdrehten Stellung nach "Abschließen" des Rads,
- Gegenlenken bei Traktionsverlust in Kurven,
- Force-Feedback für besseres Lenkverhalten an den Fahrer und/oder
- Force-Feedback als Signalisierungen von Gefahren oder dergleichen an den Fahrer, z.B. durch Vibration an der Lenkeinheit.

Vorzugsweise weist das hydraulische System wenigstens ein Ventil und/oder wenigstens eine Pumpe zum Druckmodulieren und Eingriff in das Lenkverhalten auf. Bevorzugt ist zusätzlich ein Reservoir am Ventil und/oder der Pumpe angeschlossen. Erfindungsgemäß weist das hydraulisches System eine Elektronik auf, wobei die Elektronik eingerichtet ist, Daten von Sensoren zu empfangen und ausgehend von den empfangenen Daten das hydraulische System anzusteuern, um einen Eingriff in das Lenkverhalten der zu lenkenden Einheit auszuführen.

Hierdurch ist ein Eingriff auf einfache Weise ausführbar. Vorzugsweise wird die Elektronik mittels eines Akkumulators bestromt. Bevorzugt weist die Elektronik ein Steuergerät auf. Besonders bevorzugt weist die Elektronik eine Recheneinheit auf. Erfindungsgemäß weist das hydraulische System Sensoren auf, wobei die Sensoren eingerichtet sind, eine Änderung der Stabilität und/oder eine Schräglage eines Zweirads, insbesondere Fahrrads, und/oder einen Lenkwinkel und/oder einen Lenkeinschlag und/oder eine Lenkbewegung der Lenkeinheit des Zweirads zu detektieren.

Vorzugsweise werden als Sensoren Beschleunigungs-, Lenkwinkel, und/oder Drehratensensoren verwendet.

Die Unteransprüche zeigen bevorzugte Weiterbildungen der Erfindung.

Weiter vorteilhaft weist das hydraulische System einen ersten Kolben auf, der an der Lenkeinheit angeschlossen ist und einen zweiten Kolben auf, der an der zu lenkenden Einheit angeschlossen ist, wobei der erste Kolben und der zweite Kolben mittels einer ersten Hydraulikleitung miteinander verbunden sind und wobei wenigstens ein Ventil und/oder wenigstens eine Pumpe an der ersten Hydraulikleitung angeordnet oder angeschlossen ist/sind.

Vorzugsweise ist der erste Kolben an einer Seite der Lenkeinheit befestigt. Bei einem Fahrradlenker kann das links oder rechts sein. Vorzugsweise ist der zweite Kolben an einer Seite der zu lenkenden Einheit befestigt.

Ähnlich wie bei hydraulischen Bremsen wird über Kolben und Hydraulikleitungen eine Kraft auf die zu lenkende Einheit, nämlich die Gabel oder Fahrradgabel, übertragen. Bevorzugt wird als Flüssigkeit für die Hydraulikleitung eine Lenkflüssigkeit bzw. Bremsflüssigkeit verwendet, insbesondere Mineralöl.

Ein Vorsehen des hydraulischen Systems kann grundsätzlich gänzlich neue Zweiradgeometrien ermöglichen (bspw. Lastenräder, Räder mit Lenkung hinten), aber natürlich auch in herkömmlichen Geometrien eingesetzt werden. Dies kann durch das Wegfallen der starren Lenkachse als Verbindung zwischen Lenkeinheit und zu lenkender Einheit erreicht werden.

Weiter vorteilhaft wird ein über ein erstes Ventil ein erstes zuschaltbares Reservoir an der ersten Hydraulikleitung angeschlossen.

Vorzugsweise wird durch Öffnen des Ventils dem Rad kurzzeitig eine Freiheit gegeben, den wirkenden Kräften zu folgen. In einer kritischen Kurvensituation z.B. kann, je nach Zweiradgeometrie, dieses kurze "Loslassen" durch Eigenstabilisierung des Fahrrades zu einer über die Ventilöffnungszeit kontrollierten Gegenlenkung führen; das daraus resultierende Aufstellmoment kann für eine Stabilisierung schon ausreichen, insbesondere in Kombination mit ABS. Dieses kurzzeitige "Loslassen" führt zu einem "Offset" zwischen Lenkerwinkel und Gabellenkwinkel, der dann bei Geradeausfahrt wieder korrigiert werden muss. Dies ist akzeptabel, da der Offset klein und beherrschbar ist, bis geeignete Gegenkräfte (z.B. Feder im Reservoir oder Gegenlenkung) den Offset wieder korrigieren können (z.B. durch erneutes Öffnen des Ventils). Um solche Situationen zu detektieren, kann der Einsatz von Drucksensoren sinnvoll sein.

Alternativ ist ein über eine erste Pumpe erstes zuschaltbares Reservoir an der ersten Hydraulikleitung angeschlossen.

Mit wenigstens einer zusätzlichen Pumpe werden die Eingriffsmöglichkeiten deutlich erweitert, sowohl hinsichtlich Radseite (Lenkeingriffe) als auch in Richtung Fahrer (Force Feedback zur Signalisierung z.B. von Gefahrensituationen an den Fahrer; Force Feedback als Rückmeldung bei Lenkeingriffen für korrektes Fahrgefühl etc). Mit einer Pumpe kann auch der Offset aktiv wieder zurückgestellt werden.

Weiter vorteilhaft ist ein weiteres Ventil an der ersten Hydraulikleitung angeordnet.

Vorzugsweise wird der Fahrer durch das weitere Ventil - analog zum ABS - entkoppelt, um ein "Nachdrücken" zu vermeiden.

Eine simple Wegfahrsperre kann realisiert werden, indem der Nutzer beim Abstellen des Rades per Knopfdruck das verbindende Ventil öffnet und den Lenker querdreht. Durch eine Wegnahme von Strom kann diese Position dann beibehalten werden, bis der Lenker wieder manuell richtiggestellt wird.

Mit den zwei Pumpen werden die Eingriffsmöglichkeiten nochmals deutlich erweitert; hiermit können unabhängig Eingriffe auf der Radseite (hier Lenkeingriffe) als auch in Richtung Fahrer (hier Force Feedback zur Signalisierung z.B. von Gefahrensituationen an den Fahrer; Force Feedback als Rückmeldung bei Lenkeingriffen für korrektes Fahrgefühl) durchgeführt werden. Mit den Pumpen kann auch der Offset aktiv wieder zurückgestellt werden.

Daher sind weiter vorteilhaft ein über eine erste Pumpe erstes zuschaltbares Reservoir und ein über eine zweite Pumpe zweites zuschaltbares Reservoir an der ersten Hydraulikleitung angeschlossen, wobei zwischen beiden Pumpen ein erstes Ventil an der ersten Hydraulikleitung angeordnet ist.

Alternativ sind ein erstes Ventil und ein zweites Ventil an der ersten Hydraulikleitung angeschlossen, wobei zwischen beiden Ventilen ein über eine erste Pumpe erstes zuschaltbares Reservoir angeordnet ist.

Vorzugsweise ist das Reservoir ein Behältnis, welches Flüssigkeit aufnehmen und wieder abgeben kann, insbesondere Lenkflüssigkeit. Insbesondere in Systemen ohne Pumpe verfügt das Reservoir vorzugsweise über eine Membran und eine Feder, die eine Rückstellkraft hat, die ausreichend dimensioniert ist, aufgenommene Flüssigkeit wieder in die Hydraulikleitung zu pressen, wenn keine Kraft an Lenkeinheit oder zu lenkender Einheit anliegt.

Die bisherigen Ausführungsformen beruhen darauf, die Übertragung mit einer einzigen Hydraulikleitung zu realisieren. Genauso vorstellbar ist es jedoch, zwei Hydraulikleitungen (rechts und links) zu verwenden. Letztere Option bietet die zusätzliche Möglichkeit, Flüssigkeitsvolumen von einer Hydraulikleitung auf die jeweils andere Hydraulikleitung umzuleiten.

Weiter vorteilhaft weist das hydraulische System daher einen dritten Kolben auf, der an der Lenkeinheit angeschlossen ist und einen vierten Kolben auf, der an der zu lenkenden Einheit angeschlossen ist, wobei der dritte Kolben und der vierte Kolben mittels einer zweiten Hydraulikleitung miteinander verbunden sind und wobei wenigstens ein Ventil und/oder wenigstens eine Pumpe an der zweiten Hydraulikleitung angeordnet oder angeschlossen ist/sind.

Vorzugsweise ist der erste Kolben an einer Seite der Lenkeinheit befestigt und der dritte Kolben an der anderen Seite der Lenkeinheit befestigt. Bei einem Fahrradlenker kann das links oder rechts sein.

Weiter vorteilhaft sind ein erstes Ventil an der ersten Hydraulikleitung und ein zweites Ventil an der zweiten Hydraulikleitung angeordnet, wobei
- ein die erste Hydraulikleitung und die zweite Hydraulikleitung verbindendes drittes Ventil oder
- eine die erste Hydraulikleitung und die zweite Hydraulikleitung verbindende erste Pumpe und/oder zweite Pumpe vorgesehen ist/sind.

Weiter vorteilhaft sind ein erstes Ventil und ein drittes Ventil an der ersten Hydraulikleitung und ein zweites Ventil und ein viertes Ventil an der zweiten Hydraulikleitung angeordnet, wobei eine erste Pumpe zwischen dem ersten Ventil und dem dritten Ventil und zwischen dem zweiten Ventil und dem vierten Ventil angeschlossen ist und die Hydraulikleitungen verbindet.

Das erfindungsgemäße Verfahren zum Eingriff in das Lenkverhalten einer zu lenkenden Einheit des Zweirads, insbesondere Fahrrad, weist den Schritt auf:
- Ausführen eines druckmodulierenden Eingriffs in das Lenkverhalten der zu lenkenden Einheit in Reaktion auf eine Änderung der Stabilität und/oder eine Schräglage des Zweirads und/oder einen Lenkwinkel und/oder einen Lenkeinschlag und/oder eine Lenkbewegung der Lenkeinheit des Zweirads.

Bevorzugt weist das Verfahren nachfolgende Schritte auf:
- Detektieren der Änderung der Stabilität und/oder der Schräglage des Zweirads und/oder des Lenkwinkels und/oder des Lenkeinschlags und/oder der Lenkbewegung der Lenkeinheit des Zweirads mittels Sensoren und im Ansprechen darauf
- Empfangen von Daten der Sensoren mittels einer Elektronik und im Ansprechen darauf
- Ansteuern des hydraulischen Systems, zum Ausführen eines Eingriffs in das Lenkverhalten der zu lenkenden Einheit.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1a: eine schematische Ansicht von zusammenwirkenden Komponenten für die Ausführungsformen der Erfindung,
- Figur 1b: eine schematische Ansicht einer ersten Ausführungsform der Erfindung,
- Figur 2: eine schematische Draufsicht auf die Ausführungsform gemäß Figur 1b,
- Figur 3: eine schematische Draufsicht auf eine weitere erfindungsgemäße Ausführungsform nach dem Grundprinzip gemäß den Figuren 1b und 2,
- Figur 4: eine schematische Draufsicht auf eine weitere erfindungsgemäße Ausführungsform nach dem Grundprinzip gemäß den Figuren 1b und 2,
- Figur 5: eine schematische Draufsicht auf eine weitere erfindungsgemäße Ausführungsform nach dem Grundprinzip gemäß den Figuren 1b und 2,
- Figur 6: eine schematische Draufsicht auf eine weitere erfindungsgemäße Ausführungsform nach dem Grundprinzip gemäß den Figuren 1b und 2,
- Figur 7: eine schematische Draufsicht auf eine weitere erfindungsgemäße Ausführungsform nach dem Grundprinzip gemäß den Figuren 1b und 2,
- Figur 8: eine schematische Ansicht einer zweiten Ausführungsform der Erfindung,
- Figur 9: eine schematische Draufsicht auf die Ausführungsform gemäß Figur 8,
- Figur 10: eine schematische Draufsicht auf eine weitere erfindungsgemäße Ausführungsform nach dem Grundprinzip gemäß den Figuren 8 und 9,
- Figur 11: eine schematische Draufsicht auf eine weitere erfindungsgemäße Ausführungsform nach dem Grundprinzip gemäß den Figuren 8 und 9,
- Figur 12: eine schematische Draufsicht auf eine weitere erfindungsgemäße Ausführungsform nach dem Grundprinzip gemäß den Figuren 8 und 9 und
- Figur 13: eine schematische Draufsicht auf eine weitere erfindungsgemäße Ausführungsform nach dem Grundprinzip gemäß den Figuren 8 und 9.

### Ausführungsformen der Erfindung

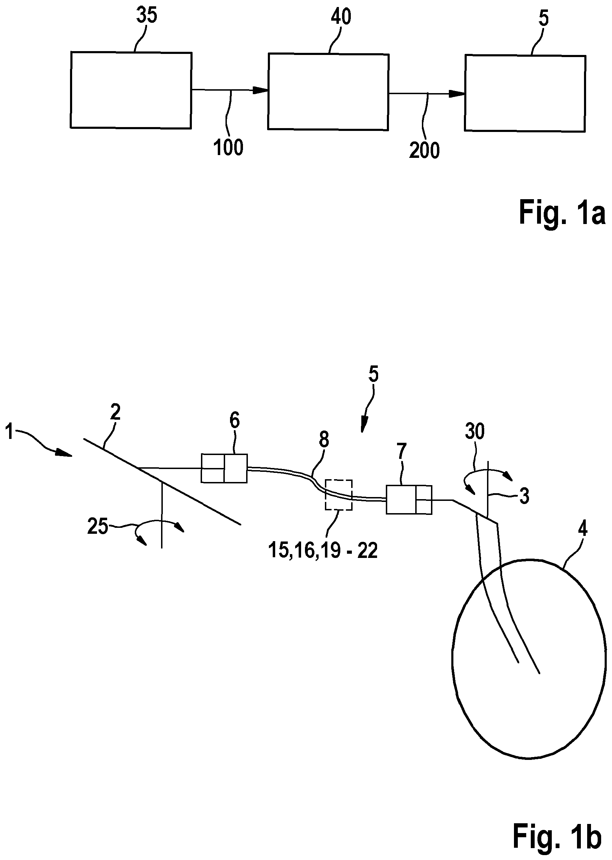

Figur 1a zeigt eine Elektronik 40, einen Sensor 35 und ein hydraulisches System 5. Die Elektronik 40 weist eine Recheneinheit auf. Die Sensoren 35 sind eingerichtet, eine Änderung der Stabilität und/oder eine Schräglage eines Zweirads (gemäß den Figuren 1b bis 13) und/oder einen Lenkwinkel und/oder einen Lenkeinschlag und/oder eine Lenkbewegung einer Lenkeinheit (gemäß den Figuren 1b bis 13) des Zweirads zu detektieren. Die Elektronik 40 mit der Recheneinheit ist eingerichtet, Daten der Sensoren 35 zu empfangen und ausgehend von den empfangenen Daten das hydraulische System 5 anzusteuern, um so einen Eingriff in das Lenkverhalten einer zu lenkenden Einheit (gemäß den Figuren 1a bis 13) des Zweirads auszuführen. Im Schritt 100 ist eine Datenübertragung vom Sensor 35 zur Elektronik 40 gezeigt. Im Schritt 200 ist ein Ansteuern des hydraulischen Systems 5 durch die Elektronik 40 gezeigt.

Ein Zusammenwirken der in Fig. 1a gezeigten Komponenten ist auf alle nachfolgenden Figuren 1b bis 13 anwendbar.

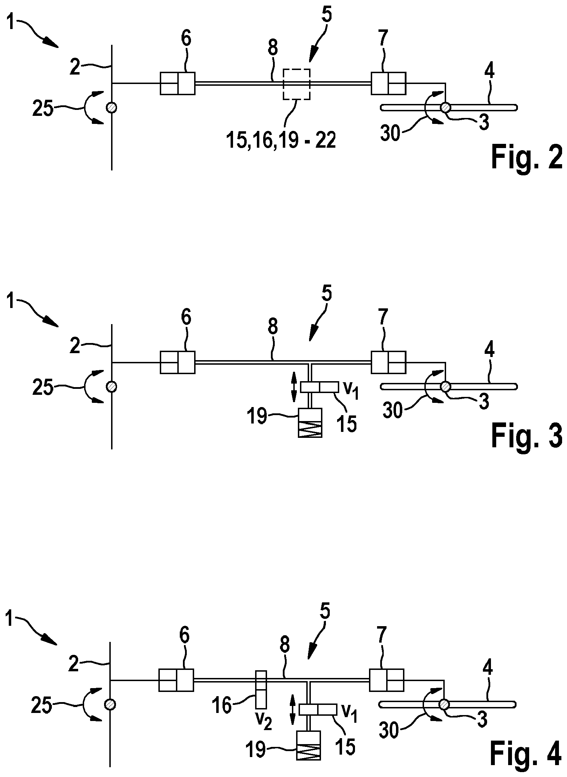

Figur 1b zeigt eine schematische Ansicht eines Zweirads 1 und Figur 2 zeigt eine Draufsicht auf das Zweirad 1 aus Figur 1b. Das Zweirad 1 ist als ein ElektroFahrrad ausgebildet. Das Fahrrad 1 weist einen Lenker 2, eine Gabel 3 und ein mit der Gabel 3 verbundenes Vorderrad 4 sowie ein hydraulisches System 5 auf. Der Übersicht halber wurde auf eine Darstellung des Rahmens, des Hinterrades und weiterer Anbauteile verzichtet. Alternativ kann auch das Hinterrad gesteuert werden.

Der Lenker 2 ist vorliegend von der Gabel 3 mechanisch entkoppelt. Eine Kopplung der beiden Bauteile erfolgt lediglich mittels des hydraulischen Systems 5. Hierfür weist das hydraulische System 5 einen ersten lenkernahen Kolben 6 und einen zweiten radnahen Kolben 7 auf. Der erste Kolben 6 ist am Lenkrad 2 angeschlossen. Der zweite Kolben 7 ist an der Gabel 3 angeschlossen. Der erste Kolben 6 und der zweite Kolben 7 sind mittels einer ersten Hydraulikleitung 8 miteinander verbunden.

Infolge einer Lenkbewegung des Lenkers 2 im Uhrzeigersinn, also einer Drehung 25 nach rechts, erfolgt eine Drehung 30 der Gabel 3 im Uhrzeigersinn. In den Figuren 1b und 2 entspricht ein Betrag der Drehung 25 des Lenkers 2 einem Betrag der Drehung 30 der Gabel 3.

In den nachfolgenden Figuren 3 bis 7 lässt sich mittels Ventilen, Reservoiren und Pumpen, die in dem hydraulischen System 5 angebracht sind und durch die Elektronik angesteuert werden, ein Betrag der Drehung 30 der Gabel 3 einstellen, der geringer oder größer ist als ein Betrag der Drehung 25 des Lenkers 2.

Das Fahrrad 1 weist in den Figuren 3 bis 7 auch die Elektronik und Sensoren gemäß Fig. 1a auf. Die Sensoren sind eingerichtet, eine Änderung des Lenkwinkels, der Schräglage und/oder der Stabilität des Fahrrads 1 zu detektieren. Die Elektronik ist eingerichtet, Daten der Sensoren zu empfangen und ausgehend von den empfangenen Daten das hydraulische System 5 anzusteuern, um einen Eingriff in das Lenkverhalten der Gabel 3 - und damit des Vorderrades 4 - auszuführen, und/oder dem Fahrer ein haptisches Feedback (beispielsweise durch eine Rüttelbewegung, beispielsweise aufgrund drohender Gefahrensituationen) zu geben.

Figur 3 zeigt ein Fahrrad 1, das gegenüber der Figur 1b zusätzlich ein über ein erstes Ventil 15 zuschaltbares erstes Reservoir 19 aufweist, das an der ersten Hydraulikleitung 8 angeschlossen ist. In Figur 3 ist eine einfache Eingriffsmöglichkeit in Form eines über das Ventil 15 zuschaltbare Reservoir 19 gezeigt, welches im Normalzustand halb mit Lenkflüssigkeit gefüllt ist. Mit dieser Anordnung kann beispielsweise eine zu heftige Lenkbewegung eines Fahrers abgefangen und dessen Auswirkung auf das Rad 4 gedämpft werden, indem ein Teil des vom Fahrer aufgebauten Lenkdrucks durch a) Umleiten der Lenkflüssigkeit in das Reservoir (bei Überdruck infolge Drehung des Lenkers im Uhrzeigersinn) oder b) Herauslassen zusätzlicher Lenkflüssigkeit aus dem Reservoir heraus (bei Unterdruck infolge Drehung des Lenkers gegen den Uhrzeigersinn) im Betrag reduziert wird.

Figur 4 zeigt ein Fahrrad 1, das gegenüber der Figur 3 zusätzlich ein zweites Ventil 16 aufweist, das an der ersten Hydraulikleitung 8 angeordnet ist. Das zweite Ventil 16 ist in einem ersten Bereich zwischen dem ersten Ventil 15 und dem ersten Kolben 6 angeordnet.

In Figur 4 besteht die zusätzliche Möglichkeit, den Fahrer abzukoppeln, indem man das zweite Ventil 16 schließt. Damit ist ausgeschlossen, dass immer weiter Druck aufgebaut wird, was angesichts der begrenzten Regelmöglichkeiten des begrenzt großen Reservoirs 19 relevant sein kann.

Wenn das zweite Ventil 16 geschlossen und das erste Ventil 15 geöffnet wird, gibt man dem Fahrrad 1 die Möglichkeit, den an ihm wirkenden Kräften in der Zeit der Ventilaktivität frei (bzw. nur begrenzt von der Federkraft im Reservoir und der Viskosität der Lenkflüssigkeit) zu folgen.

Alternativ kann es sinnvoll sein, das zweite Ventil 16 in die Verbindung zwischen dem ersten Ventil 15 und dem zweiten Kolben 7 zu platzieren statt zwischen dem ersten Ventil 15 und dem ersten Kolben 6. In diesem Fall wird das Vorderrad 4 auf dem aktuellen Lenkwinkel festgehalten, und die Lenkbewegung des Fahrers greift "ins Leere", weil der Flüssigkeitsaustausch mit dem Reservoir 19 stattfindet und nicht mit dem lenkernahen Kolben 6. Dies kann sinnvoll sein, um beispielsweise den Lenker 2 manuell zu verdrehen, was insbesondere für eine manuelle Diebstahlsicherung sinnvoll ist (Drehen des Lenkers 2 um einen gewissen Winkel, um ein Lenken zu erschweren, in einem entsprechenden Sondermodus beim "Absperren" des Fahrrads 1).

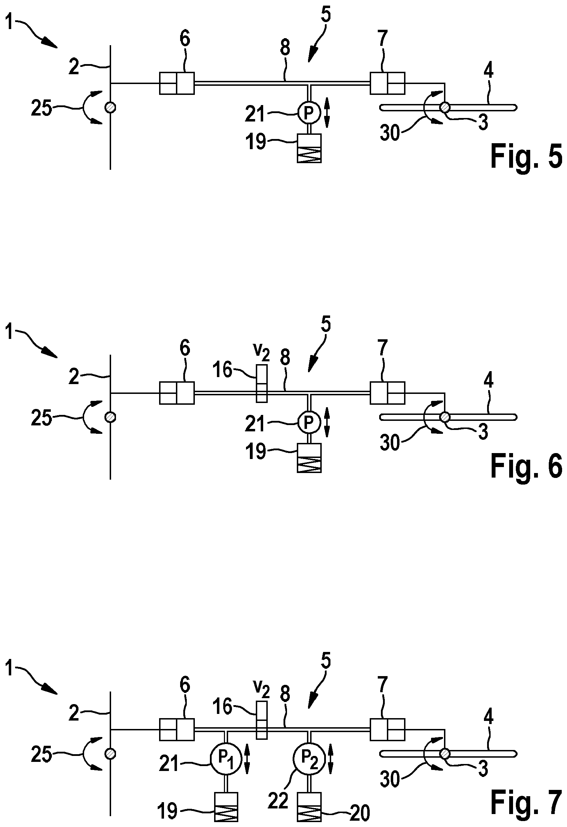

Figur 5 zeigt ein Fahrrad 1, das gegenüber der Figur 1b zusätzlich ein über eine erste Pumpe 21 zuschaltbares erstes Reservoir 19 aufweist, die an der ersten Hydraulikleitung 8 angeschlossen ist.

Die Pumpe 21 kann aktiv sowohl Druck in der Hydraulikleitung 8 aufbauen als auch Druck abbauen. Dabei wird Lenkflüssigkeit in die Hydraulikleitung 8 gepumpt oder ihr entzogen. Damit sind aktive "Überlagerungen" des Fahrerlenkdrucks möglich, beispielsweise eine aktive Dämpfung seiner Lenkbewegung, als auch andersartige Lenkeingriffe mit der Einschränkung, dass sich die überlagerte Druckänderung an Rad 4 und Lenker 2 gleichermaßen bemerkbar macht. Dies kann von Vorteil sein, da der Fahrer den "Gegendruck" spürt, aber hat die Eigenschaft, dass der Fahrer immer durch zusätzlichen Lenkdruck die Überlagerung wiederum überstimmen kann.

Figur 6 zeigt ein Fahrrad 1, das gegenüber der Figur 5 zusätzlich ein Ventil 16 aufweist, das an der ersten Hydraulikleitung 8 angeordnet ist.

Damit sich die Druckmodulation der Pumpe 21 direkt und ausschließlich auf den Lenkwinkel des Vorderrads 4 auswirkt, wird das Ventil 16 eingebracht, mit dem der Fahrer abgeklemmt, d.h. entkoppelt, werden kann.

Alternativ kann es sinnvoll sein, das Ventil 16 in die Verbindung zwischen der Pumpe 21 und dem zweiten Kolben 7 zu platzieren statt zwischen der Pumpe 21 und dem lenkernahen Kolben 8. In diesem Fall wird das Rad 4 mit einem geschlossenen Ventil 16 auf dem aktuellen Lenkwinkel festgehalten. Eine Druckmodulation der Pumpe 21 schlägt sich nur am Lenker 2 nieder. Dies könnte für ein Feedback, also eine Rückmeldung, beispielsweise in Form von Vibration(en), an den Fahrer genutzt werden, oder beispielsweise für eine motorische Verdrehung des Lenkers 2 als Diebstahlsicherung (wie unter Figur 4 beschrieben) nur über die Pumpe 21 statt manuell.

Figur 7 zeigt ein Fahrrad 1, das gegenüber der Figur 6 zusätzlich eine zweite Pumpe 22 aufweist, die an der ersten Hydraulikleitung 8 angeschlossen ist. Das über die erste Pumpe 21 erste zuschaltbare Reservoir 19 ist an der ersten Hydraulikleitung 8 angeschlossen und das über der zweiten Pumpe 22 zweite zuschaltbare Reservoir 20 ist ebenfalls an der ersten Hydraulikleitung 8 angeschlossen. Zwischen beiden Pumpen 21, 22 ist ein Ventil 16 an der ersten Hydraulikleitung 8 angeordnet ist.

Mit der ersten Pumpe 21 und der zweiten Pumpe 22 kann unabhängig voneinander, wenn das Ventil 16 geschlossen ist, auf den Lenker 2 und das Vorderrad 4 eingewirkt werden.

Alternativ könnte man auch eine Pumpe und zwei Ventile (in Richtung des Lenkers 2 und in Richtung des Vorderrads 4) anordnen. Damit kann der Radwinkel des Rads 4 und der Lenkwinkel des Lenkers 2 unabhängig voneinander beeinflusst werden, jedoch nur sequentiell.

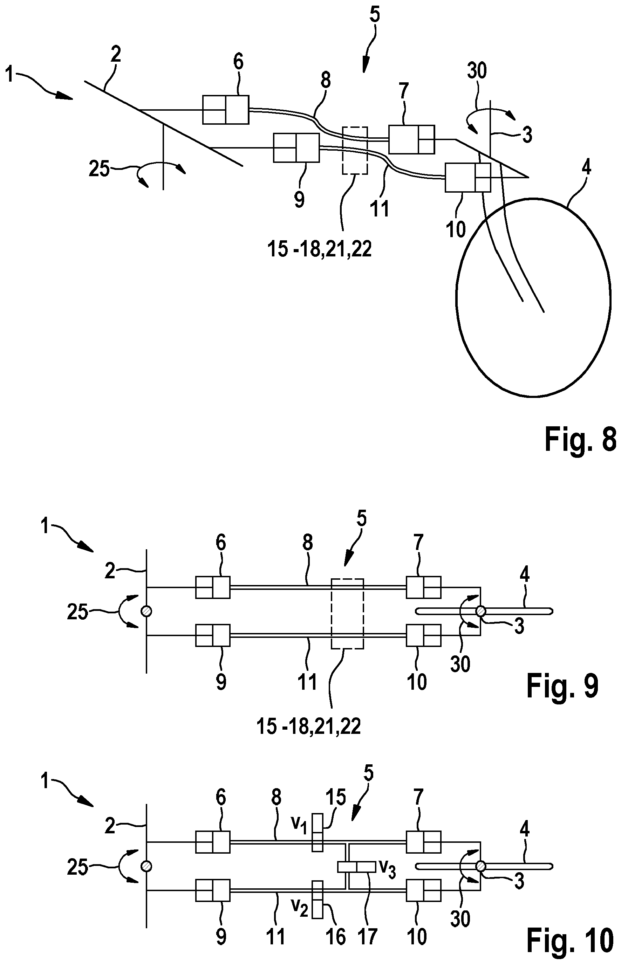

Figur 8 zeigt eine weitere schematische Ansicht eines Zweirads 1 und Figur 9 zeigt eine Draufsicht auf das Zweirad 1 aus Figur 8. Die Figuren 8 und 9 zeigen analog das System auf, wie in der Figuren 1b und 2 gezeigt, wenn zwei Hydraulikleitungen 8, 11 statt nur einer Hydraulikleitung 8 zwischen Lenker 2 und Vorderrad 4 verwendet werden.

Das hydraulische System 5 weist den ersten lenkernahen Kolben 6 und den zweiten radnahen Kolben 7 auf. Außerdem weist das hydraulische System 5 einen dritten lenkernahen Kolben 9 und einen radnahen vierten Kolben 10 auf. Der erste Kolben 5 und der dritte Kolben sind links und rechts am Lenkrad 2 angeschlossen. Der zweite Kolben 7 und der vierte Kolben 10 sind links und rechts an der Gabel 3 angeschlossen. Der erste Kolben 6 und der zweite Kolben 7 sind mittels einer ersten Hydraulikleitung 8 miteinander verbunden. Der dritte Kolben 9 und der vierte Kolben 10 sind mittels einer zweiten Hydraulikleitung 11 miteinander verbunden.

Vorteilhafterweise sind die Kolben 6, 7, 9 und 10 kleiner dimensionierbar, um dieselbe Kraft zu übertragen, verbunden mit einer doppelten Anzahl an Kolben und Hydraulikleitungen.

Zudem bietet diese Option die Möglichkeit, nicht in ein Reservoir, sondern Lenkflüssigkeit zwischen den beiden Leitungen hin und her transferieren zu können. Ein Reservoir ist damit nicht mehr nicht notwendig. Ferner ist man bezüglich der Eingriffsmöglichkeiten nicht mehr auf ein begrenzt großes Reservoir eingeschränkt. In einer "Abschließfunktion" wäre hier dann ein Drehen des Lenkers 2 um beispielsweise 90° möglich.

In den nachfolgenden Figuren 10 bis 13 lässt sich mittels des hydraulischen Systems 5 ein Betrag der Drehung 30 der Gabel 3 einstellen, der sich vom Betrag der Drehung 25 des Lenkers 2 unterscheidet und somit einen Lenkeingriff darstellt.

Figur 10 zeigt ein Fahrrad 1, das gegenüber der Figur 9 zusätzlich ein erstes Ventil 15 an der ersten Hydraulikleitung 8 und ein zweites Ventil 16 an der zweiten Hydraulikleitung 11 aufweist, wobei ein die erste Hydraulikleitung 8 und die zweite Hydraulikleitung 11 verbindendes drittes Ventil 17 angeschlossen ist. Das dritte Ventil 17 ist zwischen den Ventilen 15, 16 und den Kolben 7, 10 angeordnet.

In Figur 10 ist eine einfache Eingriffsmöglichkeit gezeigt, bei der der Fahrer via dem ersten Ventil 15 und dem zweiten Ventil 16 abgeklemmt, d.h. entkoppelt, wird und dem Vorderrad 4 freier Lauf gelassen wird, indem das dritte Ventil 17 geöffnet wird.

Alternativ könnte das erste Ventil 15 und das zweite Ventil 16 auf die andere Seite, also zwischen dem dritten Ventil 17 und den radseitigen Kolben 7 und 10 angeordnet werden. Damit könnte man das Vorderrad 4 fixieren, aber dem Lenker 2 freien Lauf lassen, beispielsweise zum manuellen Verdrehen des Lenkers 2 zum Zwecke der "Verriegelung".

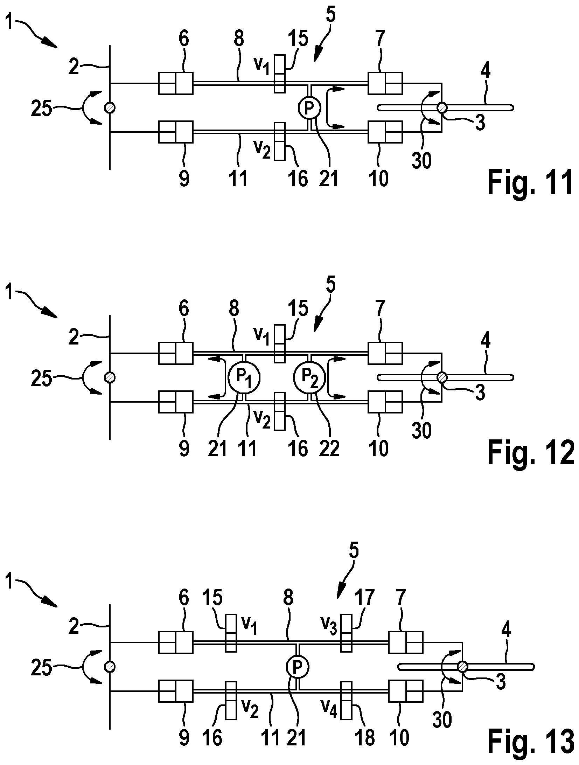

Figur 11 zeigt ein Fahrrad 1, das gegenüber der Figur 9 zusätzlich ein erstes Ventil 15 an der ersten Hydraulikleitung 8 und ein zweites Ventil 16 an der zweiten Hydraulikleitung 11 angeordnet sind, wobei eine die erste Hydraulikleitung 8 und die zweite Hydraulikleitung 11 verbindende erste Pumpe 21 angeschlossen ist. Die Pumpe 21 ist zwischen den Ventilen 15, 16 und den Kolben 7, 10 angeordnet.

Die Pumpe 21 ermöglicht ein Hin- und Herpumpen zwischen den beiden Hydraulikleitungen und damit ein Einstellen eines beliebigen "Offset"-Winkels zwischen dem Lenkerwinkel und dem Radwinkel. Damit wird das Spektrum möglicher aktiver Lenkeingriffe deutlich größer.

Figur 12 zeigt ein Fahrrad 1, das gegenüber der Figur 11 zusätzlich ein die erste Hydraulikleitung 8 und die zweite Hydraulikleitung 9 verbindende zweite Pumpe 22 angeschlossen ist. Die zweite Pumpe 22 ist zwischen den Ventilen 15, 16 und den Kolben 7, 10 angeordnet.

Figur 13 zeigt ein Fahrrad 1, das gegenüber der Figur 9 zusätzlich ein erstes Ventil 15 und ein drittes Ventil 17 aufweist, die an der ersten Hydraulikleitung 8 angeordnet sind und ein zweites Ventil 16 und ein viertes Ventil 18 aufweist, die an der zweiten Hydraulikleitung 11 angeordnet sind, wobei eine erste Pumpe 21 zwischen dem ersten Ventil 15 und dem dritten Ventil 17 und zwischen dem zweiten Ventil 16 und dem vierten Ventil 18 angeschlossen ist und die Hydraulikleitungen 8, 11 verbindet.

In den Figuren 12 und 13 werden Ausführungsform gezeigt, mit denen unabhängig voneinander auf Lenker 2 und Vorderrad 4 eingewirkt werden kann, wobei dies entweder mit zwei Ventilen 15, 16 und zwei Pumpen 21, 22, oder mit einer Pumpe 21 und vier Ventilen 15, 16, 17 und 18 erfolgen kann.

Während die vorliegende Erfindung anhand der beigefügten Figuren ausführlich und detailliert beschrieben worden ist, bleibt der Schutzbereich der vorliegenden Erfindung allein durch die beigefügten Ansprüche beschränkt.

## Patentansprüche

1. Hydraulisches System (5) zur Kraftübertragung eines Lenkmoments von einer Lenkeinheit (2) auf eine zu lenkende Einheit (3) eines Zweirads, wobei das hydraulische System (5) eingerichtet ist, einen Druck im hydraulischen System (5) zu modulieren und in das Lenkverhalten der zu lenkenden Einheit (3) zur Stabilisierung des Zweirads einzugreifen, aufweisend eine Elektronik (40), wobei die Elektronik (40) eingerichtet ist, Daten von Sensoren (35) zu empfangen und ausgehend von den empfangenen Daten das hydraulische System (5) anzusteuern, um einen Eingriff in das Lenkverhalten der zu lenkenden Einheit (3) auszuführen,
**dadurch gekennzeichnet, dass** das hydraulische System (5) Sensoren (35) aufweist, wobei die Sensoren (35) eingerichtet sind, eine Änderung der Stabilität und/oder eine Schräglage eines Zweirads (1), insbesondere Fahrrads, und/oder einen Lenkeinschlag und/oder eine Lenkbewegung der Lenkeinheit (2) des Zweirads (1) zu detektieren.

2. Hydraulisches System (5) nach einem der vorstehenden Ansprüche, wobei das hydraulische System (5) einen ersten Kolben (6) aufweist, der an der Lenkeinheit (2) angeschlossen ist und einen zweiten Kolben (7) aufweist, der an der zu lenkenden Einheit (3) angeschlossen ist, wobei der erste Kolben (6) und der zweite Kolben (7) mittels einer ersten Hydraulikleitung (8) miteinander verbunden sind und wobei wenigstens ein Ventil (15, 16, 17, 18) und/oder wenigstens eine Pumpe (21, 22) an der ersten Hydraulikleitung (8) angeordnet oder angeschlossen ist/sind.

3. Hydraulisches System (5) nach Anspruch 2, wobei
- ein über ein erstes Ventil (15) erstes zuschaltbares Reservoir (19) an der ersten Hydraulikleitung (8) angeschlossen ist oder
- ein über eine erste Pumpe (21) erstes zuschaltbares Reservoir (19) an der ersten Hydraulikleitung (8) angeschlossen ist.

4. Hydraulisches System (5) nach Anspruch 3, wobei ein weiteres Ventil (16) an der ersten Hydraulikleitung (8) angeordnet ist.

5. Hydraulisches System (5) nach Anspruch 2, wobei
- ein über eine erste Pumpe (21) erstes zuschaltbares Reservoir (19) und ein über eine zweite Pumpe (22) zweites zuschaltbares Reservoir (20) an der ersten Hydraulikleitung (8) angeschlossen sind, wobei zwischen beiden Pumpen (21, 22) ein erstes Ventil (15) an der ersten Hydraulikleitung (8) angeordnet ist oder
- ein erstes Ventil (15) und ein zweites Ventil (16) an der ersten Hydraulikleitung (8) angeschlossen sind, wobei zwischen beiden Ventilen (15, 16) ein über eine erste Pumpe (21) erstes zuschaltbares Reservoir (19) angeordnet ist.

6. Hydraulisches System (5) nach Anspruch 2, wobei das hydraulische System (5) einen dritten Kolben (9) aufweist, der an der Lenkeinheit (2) angeschlossen ist und einen vierten Kolben (10) aufweist, der an der zu lenkenden Einheit (3) angeschlossen ist, wobei der dritte Kolben (9) und der vierte Kolben (10) mittels einer zweiten Hydraulikleitung (11) miteinander verbunden sind und wobei wenigstens ein Ventil (15, 16, 17, 18) und/oder wenigstens eine Pumpe (21, 22) an der zweiten Hydraulikleitung (11) angeordnet oder angeschlossen ist/sind.

7. Hydraulisches System (5) nach Anspruch 6, wobei ein erstes Ventil (15) an der ersten Hydraulikleitung (8) und ein zweites Ventil (16) an der zweiten Hydraulikleitung (11) angeordnet sind, wobei
- ein die erste Hydraulikleitung (8) und die zweite Hydraulikleitung (11) verbindendes drittes Ventil (17) oder
- eine die erste Hydraulikleitung (8) und die zweite Hydraulikleitung (11) verbindende erste Pumpe (21) und/oder zweite Pumpe (22) vorgesehen ist/sind.

8. Hydraulisches System (5) nach Anspruch 6, wobei ein erstes Ventil (15) und ein drittes Ventil (17) an der ersten Hydraulikleitung (8) und ein zweites Ventil (16) und ein viertes Ventil (18) an der zweiten Hydraulikleitung (11) angeordnet sind, wobei eine erste Pumpe (21) zwischen dem ersten Ventil (15) und dem dritten Ventil (17) und zwischen dem zweiten Ventil (16) und dem vierten Ventil (18) angeschlossen ist und die Hydraulikleitungen (8, 11) verbindet.

9. Zweirad (1), insbesondere Fahrrad, aufweisend eine Lenkeinheit (2), eine zu lenkende Einheit (3) mit einem Rad (4) und ein hydraulisches System (5) nach einem der vorstehenden Ansprüche.

10. Verfahren zum Eingriff in das Lenkverhalten einer zu lenkenden Einheit (3) eines Zweirads (1), insbesondere Fahrrads, aufweisend eine Lenkeinheit (2), eine zu lenkende Einheit (3) mit einem Rad (4) und ein hydraulisches System (5) zur Kraftübertragung eines Lenkmoments von der Lenkeinheit (2) auf die zu lenkende Einheit (3), wobei das hydraulische System (5) eingerichtet ist, einen Druck im hydraulischen System (5) zu modulieren und in das Lenkverhalten der zu lenkenden Einheit (3) zur Stabilisierung des Zweirads einzugreifen, **dadurch gekennzeichnet**, aufweisend den Schritt:
- Ausführen eines druckmodulierenden Eingriffs in das Lenkverhalten der zu lenkenden Einheit (3) in Reaktion auf eine Änderung der Stabilität und/oder eine Schräglage des Zweirads (1) und/oder einen Lenkeinschlag und/oder eine Lenkbewegung der Lenkeinheit (2) des Zweirads (1).

## Claims

1. Hydraulic system (5) for the force transmission of a steering torque from a steering unit (2) to a unit (3) to be steered of a two-wheeled vehicle, the hydraulic system (5) being set up to modulate a pressure in the hydraulic system (5) and to intervene in the steering behaviour of the unit (3) to be steered for the stabilization of the two-wheeled vehicle, having electronics (40), the electronics (40) being set up to receive data from sensors (35) and to actuate the hydraulic system (5) in a manner which proceeds from the received data, in order to carry out an intervention in the steering behaviour of the unit (3) to be steered, **characterized in that** the hydraulic system (5) has sensors (35), the sensors (35) being set up to detect a change in the stability and/or a tilted position of a two-wheeled vehicle (1), in particular a bicycle, and/or a steering lock and/or a steering movement of the steering unit (2) of the two-wheeled vehicle (1).

2. Hydraulic system (5) according to one of the preceding claims, the hydraulic system (5) having a first piston (6) which is connected to the steering unit (2) and having a second piston (7) which is connected to the unit (3) to be steered, the first piston (6) and the second piston (7) being connected to one another by means of a first hydraulic line (8), and at least one valve (15, 16, 17, 18) and/or at least one pump (21, 22) being arranged on or connected to the first hydraulic line (8).

3. Hydraulic system (5) according to Claim 2,
- a first switchable reservoir (19) being connected to the first hydraulic line (8) via a first valve (15), or
- a first switchable reservoir (19) being connected to the first hydraulic line (8) via a first pump (21) .

4. Hydraulic system (5) according to Claim 3, a further valve (16) being arranged on the first hydraulic line (8) .

5. Hydraulic system (5) according to Claim 2,
- a first switchable reservoir (19) being connected to the first hydraulic line (8) via a first pump (21), and a second switchable reservoir (20) being connected to the first hydraulic line (8) via a second pump (22), a first valve (15) being arranged on the first hydraulic line (8) between the two pumps (21, 22), or
- a first valve (15) and a second valve (16) being connected to the first hydraulic line (8), a first switchable reservoir (19) being arranged via a first pump (21) between the two valves (15, 16).

6. Hydraulic system (5) according to Claim 2, the hydraulic system (5) having a third pump (9) which is connected to the steering unit (2), and having a fourth pump (10) which is connected to the unit (3) to be steered, the third piston (9) and the fourth piston (10) being connected to one another by means of a second hydraulic line (11), and at least one valve (15, 16, 17, 18) and/or at least one pump (21, 22) being arranged on or connected to the second hydraulic line (11).

7. Hydraulic system (5) according to Claim 6, a first valve (15) being arranged on the first hydraulic line (8), and a second valve (16) being arranged on the second hydraulic line (11),
- a third valve (17) which connects the first hydraulic line (8) and the second hydraulic line (11) being provided, or
- a first pump (21) and/or second pump (22) which connects/connects the first hydraulic line (8) and the second hydraulic line (11) being provided.

8. Hydraulic system (5) according to Claim 6, a first valve (15) and a third valve (17) being arranged on the first hydraulic line (8), and a second valve (16) and a fourth valve (18) being arranged on the second hydraulic line (11), a first pump (21) being connected between the first valve (15) and the third valve (17) and between the second valve (16) and the fourth valve (18) and connecting the hydraulic lines (8, 11).

9. Two-wheeled vehicle (1), in particular bicycle, having a steering unit (2), a unit (3) to be steered with a wheel (4), and a hydraulic system (5) according to one of the preceding claims.

10. Method for intervening in the steering behaviour of a unit (3) to be steered of a two-wheeled vehicle (1), in particular bicycle, having a steering unit (2), a unit (3) to be steered with a wheel (4), and a hydraulic system (5) for the force transmission of a steering torque from the steering unit (2) to the unit (3) to be steered, the hydraulic system (5) being set up to modulate a pressure in the hydraulic system (5) and to intervene in the steering behaviour of the unit (3) to be steered for the stabilization of the two-wheeled vehicle,
**characterized in that**
it has the step:
- carrying out a pressure-modulating intervention in the steering behaviour of the unit (3) to be steered as a reaction to a change in the stability and/or a tilted position of the two-wheeled vehicle (1) and/or a steering lock and/or a steering movement of the steering unit (2) of the two-wheeled vehicle (1) .

## Revendications

1. Système hydraulique (5) pour la transmission de force d'un moment de direction d'une unité de direction (2) à une unité à diriger (3) d'un deux-roues, le système hydraulique (5) étant conçu pour moduler une pression dans le système hydraulique (5) et pour intervenir dans le comportement de direction de l'unité à diriger (3) pour la stabilisation du deux-roues, comprenant un composant électronique (40), le composant électronique (40) étant conçu pour recevoir des données de capteurs (35) et pour commander le système hydraulique (5) à partir des données reçues, afin de réaliser une intervention dans le comportement de direction de l'unité à diriger (3),
**caractérisé en ce que** le système hydraulique (5) comprend des capteurs (35), les capteurs (35) étant conçus pour détecter une modification de la stabilité et/ou une inclinaison d'un deux-roues (1), notamment d'une bicyclette, et/ou un angle de direction et/ou un mouvement de direction de l'unité de direction (2) du deux-roues (1).

2. Système hydraulique (5) selon l'une quelconque des revendications précédentes, le système hydraulique (5) comprenant un premier piston (6), qui est raccordé à l'unité de direction (2), et un deuxième piston (7), qui est raccordé à l'unité à diriger (3), le premier piston (6) et le deuxième piston (7) étant reliés l'un à l'autre au moyen d'une première conduite hydraulique (8), et au moins une soupape (15, 16, 17, 18) et/ou au moins une pompe (21, 22) étant agencées sur ou raccordées à la première conduite hydraulique (8).

3. Système hydraulique (5) selon la revendication 2, dans lequel
- un premier réservoir (19) enclenchable par l'intermédiaire d'une première soupape (15) est raccordé à la première conduite hydraulique (8), ou
- un premier réservoir (19) enclenchable par l'intermédiaire d'une première pompe (21) est raccordé à la première conduite hydraulique (8).

4. Système hydraulique (5) selon la revendication 3, dans lequel une soupape supplémentaire (16) est agencée sur la première conduite hydraulique (8).

5. Système hydraulique (5) selon la revendication 2, dans lequel
- un premier réservoir (19) enclenchable par l'intermédiaire d'une première pompe (21) et un deuxième réservoir (20) enclenchable par l'intermédiaire d'une deuxième pompe (22) sont raccordés à la première conduite hydraulique (8), une première soupape (15) étant agencée sur la première conduite hydraulique (8) entre les deux pompes (21, 22), ou
- une première soupape (15) et une deuxième soupape (16) sont raccordées à la première conduite hydraulique (8), un premier réservoir (19) enclenchable par l'intermédiaire d'une première pompe (21) étant agencé entre les deux soupapes (15, 16).

6. Système hydraulique (5) selon la revendication 2, le système hydraulique (5) comprenant un troisième piston (9), qui est raccordé à l'unité de direction (2), et comprenant un quatrième piston (10), qui est raccordé à l'unité à diriger (3), le troisième piston (9) et le quatrième piston (10) étant reliés l'un à l'autre au moyen d'une deuxième conduite hydraulique (11), et au moins une soupape (15, 16, 17, 18) et/ou au moins une pompe (21, 22) étant agencées sur ou raccordées à la deuxième conduite hydraulique (11).

7. Système hydraulique (5) selon la revendication 6, dans lequel une première soupape (15) est agencée sur la première conduite hydraulique (8) et une deuxième soupape (16) est agencée sur la deuxième conduite hydraulique (11),
- une troisième soupape (17) reliant la première conduite hydraulique (8) et la deuxième conduite hydraulique (11), ou
- une première pompe (21) et/ou une deuxième pompe (22) reliant la première conduite hydraulique (8) et la deuxième conduite hydraulique (11) étant prévues.

8. Système hydraulique (5) selon la revendication 6, dans lequel une première soupape (15) et une troisième soupape (17) sont agencées sur la première conduite hydraulique (8), et une deuxième soupape (16) et une quatrième soupape (18) sont agencées sur la deuxième conduite hydraulique (11), une première pompe (21) étant raccordée entre la première soupape (15) et la troisième soupape (17) et entre la deuxième soupape (16) et la quatrième soupape (18), et reliant les conduites hydrauliques (8, 11).

9. Deux-roues (1), notamment bicyclette, comprenant une unité de direction (2), une unité à diriger (3) munie d'une roue (4) et un système hydraulique (5) selon l'une quelconque des revendications précédentes.

10. Procédé d'intervention dans le comportement de direction d'une unité à diriger (3) d'un deux-roues (1), notamment d'une bicyclette, comprenant une unité de direction (2), une unité à diriger (3) munie d'une roue (4) et un système hydraulique (5) pour la transmission de force d'un moment de direction de l'unité de direction (2) à l'unité à diriger (3), le système hydraulique (5) étant conçu pour moduler une pression dans le système hydraulique (5) et pour intervenir dans le comportement de direction de l'unité à diriger (3) pour la stabilisation du deux-roues, **caractérisé en ce qu'**il comprend l'étape suivante :
- la réalisation d'une intervention modulant la pression dans le comportement de direction de l'unité à diriger (3) en réaction à une modification de la stabilité et/ou une inclinaison du deux-roues (1), et/ou un angle de direction et/ou un mouvement de direction de l'unité de direction (2) du deux-roues (1) .
